(19) Europäisches Patentamt
European Patent Office
Office européen des brevets

(11) **EP 0 588 057 B1**

(12) **EUROPÄISCHE PATENTSCHRIFT**

(45) Veröffentlichungstag und Bekanntmachung des Hinweises auf die Patenterteilung:
06.11.1996 Patentblatt 1996/45

(51) Int Cl.⁶: **H02P 7/638**, H02P 5/418

(21) Anmeldenummer: **93112835.9**

(22) Anmeldetag: **11.08.1993**

(54) **Verfahren zur Optimierung des Arbeitsvorgangs eines Elektrohandwerkzeugs**

Method for optimizing the operation of an electric hand tool

Méthode pour optimaliser l'opération d'un outil électrique à main

(84) Benannte Vertragsstaaten:
**CH DE GB IT LI**

(30) Priorität: **16.09.1992 DE 4230926**

(43) Veröffentlichungstag der Anmeldung:
**23.03.1994 Patentblatt 1994/12**

(73) Patentinhaber: **ROBERT BOSCH GMBH**
**70442 Stuttgart (DE)**

(72) Erfinder:
• **Hornung, Friedrich, Dipl.-Ing.**
  **D-70565 Stuttgart (DE)**
• **Hoelderlin, Andreas, Dr. Ing.**
  **D-74354 Besigheim (DE)**

(56) Entgegenhaltungen:
EP-A- 0 086 114       EP-A- 0 218 187
EP-A- 0 458 052       EP-A- 0 496 303
DE-A- 1 763 390       DE-A- 3 240 530

**Beschreibung**

Stand der Technik

Die Erfindung geht aus von einem Verfahren zur Optimierung des Arbeitsvorganges nach der Gattung des Hauptanspruchs. Es ist schon bekannt, die Drehzahl eines Elektrohandwerkzeuges in Abhängigkeit von der Belastung zu steuern oder zu regeln. Eine derartige Steuerung bewirkt, daß die Drehzahl des Elektromotors des Elektrohandwerkzeuges durch eine elektronische Drehzahlregeleinrichtung weitgehend unabhängig von der Belastung konstantgehalten wird. Eine derartige Regeleinrichtung ist aus der DE-OS 17 63 390 bekannt. Da die Belastung für den Elektromotor, insbesondere bei freihändigem Arbeiten mit einem Elektrowerkzeug, beispielsweise einer Handkreissäge, einem Winkelschleifer oder einer Bohrmaschine im wesentlichen durch den Andruck des Schnittwerkzeuges an das Werkstück bestimmt wird, ist wegen des Handbetriebes mit ständig wechselnden Belastungen zu rechnen. Es hat sich jedoch herausgestellt, daß beispielsweise bei einer Elektrohandsäge die Schnittgüte nicht nur von der Drehzahl des Sägeblattes, sondern auch im starken Maße von der Vorschubgeschwindigkeit abhängig ist. Bei niedriger Vorschubgeschwindigkeit ist zwar das Arbeitsergebnis befriedigend, nicht dagegen die Arbeitsleistung, da sehr viel Zeit für die Bearbeitung des Werkstrückes benötigt wird.

Bei hoher Vorschubgeschwindigkeit wird dagegen das Arbeitsergebnis weniger befriedigend, da bei dem hohen Vorschub die Schnittkanten ausreißen können. Auch kann bei hoher Schnittgeschwindigkeit das Sägeblatt stärker verschleißen, so daß die Säge schneller stumpf wird und dadurch das Arbeitsergebnis noch unbefriedigender wird.

Aus der EP 00 86 114 A 1 ist eine elektrische Bohrmaschine bekannt, bei der ein Mikrocomputer die Drehzahl des Elektromotors in Abhängigkeit vom eingegebenen Bohrerdurchmesser und dem Material des Werkstücks bestimmt. Eine optimale Motordrehzahl wird dadurch ermittelt, daß die in einem Speicher abgelegten Drehzalwerte für den Bohrerdurchmesser und das Material ausgelesen und als Regelgröße für die Drehzahl des Motors verwendet werden.

Bei einer Schleifmaschine der EP 0 496 303 A 1 wird die Drehzahl der Abtriebsspindel in Abhängigkeit von einem vorgegebenen Lastmoment gesteuert. Fällt das Lastmoment unter einen vorgegebenen Wert, dann wird die Drehzahl reduziert. Ist dagegen das Lastmoment größer als der vorgegebene Wert, dann wird die Drehzahl der Spindel auf einen unterschiedlichen zweiten Wert so eingestellt, daß das Drehmoment des Motors konstant bleibt.

Vorteile der Erfindung

Das erfindungsgemäße Verfahren bzw. Elektrohandwerkzeug zur Optimierung des Arbeitsvorganges hat demgegenüber den Vorteil, daß die Drehzahl des Schnittwerkzeugs nicht konstantgehalten wird, sondern der Vorschubgeschwindigkeit angepaßt wird. Dadurch ist zum Beispiel bei einer Säge sowohl bei einer hohen als auch bei einer geringen Vorschubgeschwindigkeit eine gleichbleibende Güte des Schnittes gegeben, so daß der Arbeitsvorgang dadurch optimiert ist. Durch die kontinuierlich erfaßte Vorschubgeschwindigkeit kann auch das Drehmoment des Elektromotors derart geregelt werden, daß das Elektrowerkzeug im optimalen Drehmoment arbeitet, so daß eine Überlastung bei besonders großer Vorschubgeschwindigkeit verhindert wird. optimale Arbeitspunkt für das Elektrohandwerkzeug wird in Abhängigkeit von Drehzahl und/oder Drehmoment ermittelt, da diese Parameter mit einem Sensor einfach kontrollierbar sind.

Durch die in den abhängigen Ansprüchen aufgeführten Maßnahmen sind vorteilhafte Weiterbildungen und Verbesserungen des erfindungsgemäßen Verfahrens gegeben.

Besonders vorteilhaft ist, daß für den optimalen Arbeitspunkt Qualitätsstufen für die Bearbeitungsqualität eingegeben werden können. Dadurch kann ein gleichbleibendes Qualitätsniveau bei der Bearbeitung des Werkstückes erreicht werden.

Bei einem Elektrohandwerkzeug ist der optimale Arbeitspunkt insbesondere auch durch die Eingabe von Einflußgrößen, wie Sägeblattdurchmesser, Anzahl der Sägezähne, Materialkonstanten oder Schnittiefe bestimmt. Die Berücksichtigung dieser Größen führt in Verbindung mit der Erfassung der Vorschubgescwindigkeit vorteilhaft zur Optimierung des Arbeitspunktes und damit auch des Arbeitsgangs.

Besonders vorteilhaft ist weiterhin, daß zur Messung der Vorschubgeschwindigkeit ein induktiver Sensor verwendet wird, da dieser die Wegstrecke kontaktlos erfaßt und somit das Meßergebnis unabhängig von Unebenheiten des Werkstückes oder dessen Verschmutzung ist. Besonders vorteilhaft ist, daß der Sensor einen linearen Maßstab auf einem Führungssystem aufweist, so daß keine zusätzlichen Markierungen für die Schnittlänge aufgebracht werden müssen. Beispielsweise wird im Handel als Führungssystem für eine Handkreissäge eine Führungsschiene angeboten, auf der die Handkreissäge entlanggeführt werden kann, so daß ohne großen Aufwand ein gerader Schnitt zu erzeugt werden kann. Die bekannte Führungsschiene ist daher nur noch mit den Markierungen zu versehen.

Die Markierungen können auf einfache Weise auch als Vertiefungen, Erhöhungen oder magnetisch ausgebildet sein, so daß sie von einem entsprechenden Sensor leicht erfaßbar sind.

Insbesondere können magnetische Markierungen leicht mit einer entsprechenden Folie auf der Führungsschiene entsprechend aufgebracht werden, so daß der Aufwand sehr niedrig ist.

Weitere Vorteile der Erfindung sind der Beschreibung entnehmbar.

Zeichnung

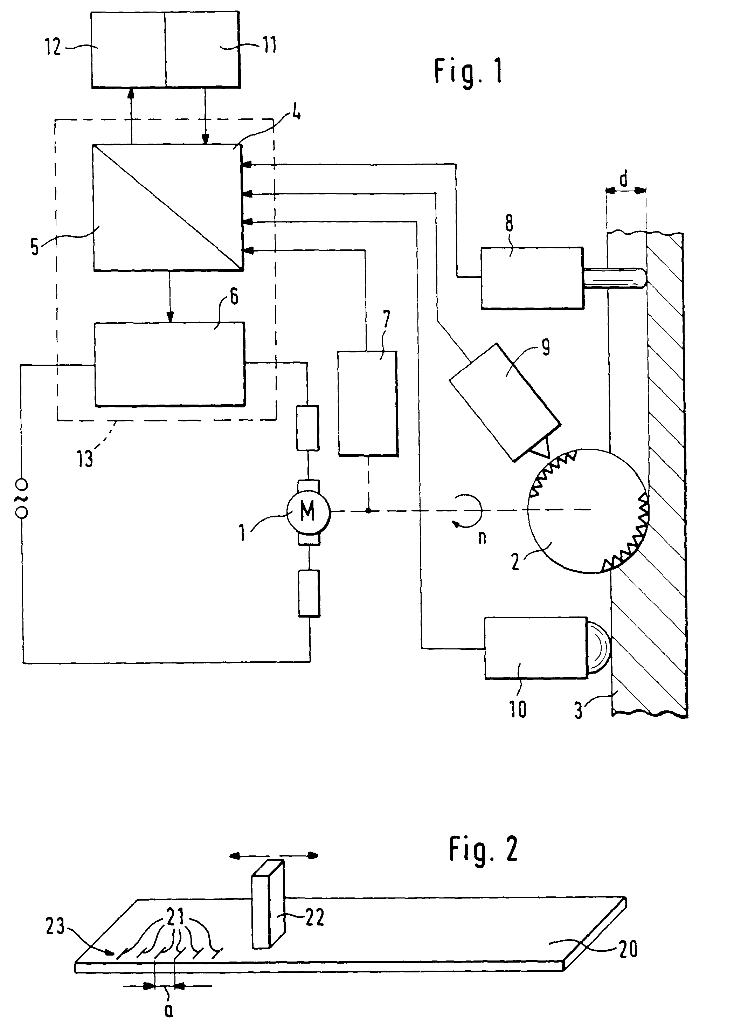

Ein Ausführungsbeispiel der Erfindung ist in der Zeichnung dargestellt. Es zeigen Figur 1 ein Ausführungsbeispiel der Erfindung, Figur 2 ein Führungssystem mit linearen Markierungen.

Beschreibung des Ausführungsbeispiels

Figur 1 zeigt einen Elektromotor 1, an dessen Welle beispielsweise ein Sägeblatt 2 angeordnet ist. Das Sägeblatt 2 dreht sich mit der Drehzahl n in Schnittrichtung. Das Sägeblatt 2 wird dabei mit der Schnittiefe d über das Werkstück 3 geführt. Die Schnittiefe d wird mit einem Sensor 8 gemessen, der hinter dem Sägeblatt 2 angeordnet ist und die Schnittiefe bezüglich der Oberfläche abtasten kann. Der Sensor 8 kann dabei ein einfacher elektromechanischer Tiefensensor sein, dessen Fühler mittels einer Feder in den Schnitt gedrückt wird. Der Fühler ist mit einem veränderbaren Widerstand verbunden, dessen Widerstandsänderung als Maß für die Auslegung des Fühlers ausgewertet wird.

Mit einem weiteren Sensor 9 kann durch indirekte Abtastung die Anzahl der Zähne des Sägeblattes 2 bezüglich der Drehzahl n gezählt werden, so daß mit dieser Information auch der Durchmesser des Sägeblattes und des Sägeblattyps erfaßt werden kann. Als Sensor eignen sich insbesondere ein induktives System, das beispielsweise aus der EP-0269562 A2 bekannt ist. Für die Bestimmung der Vorschubgeschwindigkeit ist ein Sensor 10 vorgesehen, der im einfachsten Fall als Reibrad ausgebildet ist und für eine bestimmte Wegstrecke eine vorgegebene Anzahl Impulse an eine Steuerung 13 liefert. Eine derart mechanische Abtastung ist bereits bekannt. Bevorzugt wird die Wegstrecke kontaktlos mittels eines induktiven Sensors erfasst, wobei aus der erfaßten Wegstrecke innerhalb eines Zeitabschnittes die Vorschubgeschwindigkeit nach der bekannten Formel

$$V_f = \frac{x * a}{t} \tag{1}$$

berechnet, mit X Anzahl der erfaßten Markierungen, a ist der Abstand zwischen zwei Markierung und t ist der Zeitabschnitt. Der Aufnehmer 22 ist fest am Elektrohandwerkzeug angeordnet, so daß er über das Führungssystem 20, einer Führungsschiene für das Elektrohandwerkszeug, geführt werden kann (Fig. 2). Dabei ist das Führungssystem 20 auf dem Werkstück derart fest angeordnet, daß z.B. das Sägeblatt 2 entlang der gewünschten Schnittkante sägen kann, wenn die Elektrohandsäge auf dem Führungssystem 20 geführt wird.

Figur 2 zeigt schematisch den Aufnehmer 22 des Sensors 10, der über die Markierungen 21 des Führungssystems 20 geführt wird, so daß er diese erfassen kann. Die Markierungen 21 sind in einem vorgegebenen Abstand a auf dem Führungssystem 20 aufgebracht und bilden den magnetischen Maßstab 23. Besonders vorteilhaft ist, wenn die Markierungen als kleine Ferritmagnete auf einer Folie aufgebracht sind, die auf einfache Weise auf das Führungssystem 20 aufgeklebt werden kann.

Es ist jedoch auch vorgesehen, anstelle von magnetischen Markierungen 21 Erhöhungen oder Vertiefungen auf das Führungssystem 20 z.B. durch Kleben anzubringen, die von dem Aufnehmer 22 ebenfalls erkannt werden können. Der Aufnehmer 22 liefert bei jeder erkannten Markierung 21 einen Impuls an eine Steuerung 13, die aus dem zeitlichen Abstand zweier nachfolgender Impulse die Vorschubgeschwindigkeit errechnet.

Figur 1 zeigt weiter einen Drehzahlsensor 7, der die Drehzahl n der Motorwelle oder der Antriebswelle erfaßt. Die Sensoren 7 - 10 sind mit der Steuerung 13 verbunden, die einen Mikrocomputer 4 und einen Regler für die Ansteuerung eines Triacs 6 aufweist. An die Steuerung 13 ist des weiteren eine Eingabe 11 als Tastatur sowie eine Anzeige 12 angeschlossen.

Der Triac 6 der Steuerung 13 liegt im Hauptstromkreis des Motors 1 und steuert den Stromfluß für den Motor. Der Motor 1 ist über den Triac 6 mit entsprechenden Leitungen mit einer Spannungsversorgung verbunden.

Mit der Eingabe 11 können konstante Parameter wie Materialeigenschaften, werkzeugbezogene oder maschinenbezogene Daten eingegeben werden. Ebenso kann eine gewünschte Qualitätsstufe eingegeben werden. Die Anzeige 12 zeigt gewünschte Größen, beispielsweise die Vorschubgeschwindigkeit, die Drehzahl oder das Drehmoment an.

Die Steuerung 13 ermittelt aus den eingegebenen und den gemessenen Größen mit Hilfe des Mikrocomputers 4 den optimalen Arbeitspunkt für das Elektrohandwerkzeug. Dabei kann die Optimierung des Arbeitspunktes nach verschiedenen Gesichtspunkten erfolgen:

1. Maximale Arbeitsleistung pro Zeiteinheit bei vorgegebener Qualitätsstufe,

2. Arbeitsqualität: Güte des Arbeitsergebnisses, z.B. Geradheit, Ebenheit, Ausrißfreiheit,

3. Arbeitsergonomie: Belästigung durch Lärmemissionen, Staub, Späne, Vibrationen usw.

Die einzelnen Gütekriterien können über die Eingabe 11 angewählt werden, so daß das Elektrohandwerkzeug beispielsweise beim Sägen, Fräsen, Hobeln und Bohren optimal arbeitet.

Zur Bestimmung des optimalen Arbeitspunktes beispielsweise für eine Kreissäge, Hobel oder dgl. wird unter dem Gesichtspunkt der optimalen Arbeitsleistung und der Arbeitsqualität der Vorschub $f_z$ je Zahn bestimmt:

$$f_z = \frac{V_f}{n * z} \tag{2}$$

für $V_f$ = Vorschubsgeschwindigkeit, n = Drehzahl des Sägeblattes, z = Anzahl der Zähne des Sägeblattes.

Daraus kann die optimale Drehzahl

$$n = \frac{V_f}{f_z * Z} \tag{3}$$

ermittelt werden, wenn für $V_f$ die gemessene Vorschubgeschwindigkeit bei bekannten Größen $f_z$ und z eingegeben wird.

Da zwischen der Drehzahl n und dem Drehmoment eines Elektromotors eine feste Beziehung besteht, die durch die Drehmomentkurve bekannt ist, gilt Gleichung (3) analog für das optimale Drehmoment.

Die Arbeitsergonomie ist im wesentlichen durch die mittlere Spandicke $h_m$ bestimmbar:

$$h_m = \frac{f_z}{\sqrt{D}} * \left( \sqrt{\ddot{u}} + \sqrt{\ddot{u} + a_e} \right) \tag{4}$$

D = Sägeblattdurchmesser, ü = Sägeblattüberstand, $a_e$ = Werkstückdicke.

Aus diesen Gleichungen (2) und (4) ergibt sich unter dem Gesichtspunkt der Arbeitsergonomie je nach Wahl der Spandicke und der gemessenen Vorschubgeschwindigkeit eine Drehzahl n für den optimalen Arbeitspunkt des Elektrohandwerkzeugs.

Die ermittelten Werte für die Drehzahl n, werden dem Regler 5 als Stellgröße zugeführt. Der Regler 5 steuert nach dem Prinzip der Phasenanschnittssteuerung den Triac 6 entsprechend.

Anstelle der Berechnungen können die Werte für den optimalen Arbeitspunkt einer Tabelle eines Speichers entnommen werden, auf die der Mikrocomputer Zugriff hat.

Um verschiedene Qualitätsstufen für den Arbeitsvorgang vorgeben zu können, wird in Gleichung (3) ein Qualitätsfaktor q eingeführt, so daß die Drehzahl $n_q$ nach folgendem Algorithmus gebildet wird:

$$n_q = q * \frac{V_f}{f_z * Z} \tag{5}$$

wobei durch den Qualitätsfaktor q die Drehzahl $n_q$ erhöht oder erniedrigt werden kann.

Die Erfindung ist auf alle Elektrohandwerkzeuge anwendbar, bei denen eine Vorschubgeschwindigkeit meßbar ist.

**Patentansprüche**

1. Verfahren zur Optimierung eines Arbeitsvorganges mit einem Elektrohandwerkzeug, bei dem wesentliche Einflußgrößen des Elektrohandwerkzeugs erfaßt und einer Steuerung zugeführt werden, wobei zunächst der Steuerung (13) des Elektrohandwerkzeugs konstante Größen, vorzugsweise als werkzeugbezogene, materialbezogene und/oder bearbeitungsbezogene Daten zugeführt werden, dadurch gekennzeichnet, daß während des Arbeitens als variable Größen die Vorschubgeschwindigkeit des Elektrohandwerkzeugs zugeführt wird und daß die Steuerung (13) aus den zugeführten Daten einen optimalen Arbeitspunkt für das Elektrohandwerkzeug zur

4

Bearbeitung des Werkstückes (3) in Abhängigkeit von der Drehzahl und/oder des Drehmomentes ermittelt.

2. Verfahren nach Anspruch 1, dadurch gekennzeichnet, daß der optimale Arbeitspunkt in Abhängigkeit von einer vorgegebenen Qualitätsstufe ermittelt wird.

3. Elektrohandwerkzeug insbesondere zur Durchführung des Verfahrens nach einem der vorhergehenden Ansprüche, mit einem ersten Sensor zur Erfassung der Drehzahl, mit einer Eingabe für Einflußgrößen und mit einer Steuerung, dadurch gekennzeichnet, daß das Elektrohandwerkzeug wenigstens einen weiteren Sensor (10) aufweist, der die Vorschubgeschwindigkeit relativ zum zu bearbeitenden Werkstück erfaßt und daß die Steuerung (13) ausgebildet ist, aus den eingegebenen Bearbeitungsgrößen und der erfaßten Vorschubgeschwindigkeit die Drehzahl und/oder Drehmoment des Elektromotors (1) des Elektrohandwerkzeuges zu bestimmen.

4. Elektrohandwerkzeug nach Anspruch 3, dadurch gekennzeichnet, daß der weitere Sensor (10) einen induktiven Aufnehmer (22) und einen im Zusammenhang mit dem Aufnehmer (22) wirkenden linearen Maßstab (23) auf einem Führungssystem (20) aufweist, der sich relativ zum induktiven Aufnehmer (22) bewegt, daß der magnetische Maßstab (23) Markierungen (21) aufweist, die von dem Aufnehmer (22) erfaßbar sind, und daß die Steuerung (13) ausgebildet ist, aus den erfaßten Markierungen (21) eine Wegstrecke oder Vorschubgeschwindkeit zu ermitteln.

5. Elektrohandwerkzeug nach Anspruch 4, dadurch gekennzeichnet, daß die Markierungen (21) durch magnetische Segmente gebildet sind.

6. Elektrohandwerkzeug nach Anspruch 4 oder 5 dadurch gekennzeichnet, daß die Markierungen als Magnetfolie auf dem Führungssystem (20) aufgebracht sind.

7. Elektrohandwerkzeug nach Anspruch 4, dadurch gekennzeichnet, daß die Markierungen (21) als Vertiefungen oder Erhöhungen auf dem linearen Maßstab (23) aufgebracht sind.

8. Elektrohandwerkzeug nach einem der Ansprüche 4 - 7, dadurch gekennzeichnet, daß der Sensor (10) an einem Elektrohandwerkzeug angeordnet ist, das als Säge-, Schleif-, Bohr- oder Fräswerkzeug ausgebildet ist.

## Claims

1. Method for optimizing an operation with an electric hand tool, in the case of which method essential influence variables of the electric hand tool are detected and are supplied to a controller, constant variables initially being supplied to the controller (13) of the electric hand tool, preferably as tool-related, material-related and/or processing-related data, characterized in that the feed rate of the electric hand tool is supplied as variable parameters during the operation and in that the controller (13) uses the data supplied to determine an optimum operating point for the electric hand tool for processing the workpiece (3), as a function of the rotation speed and/or the torque.

2. Method according to Claim 1, characterized in that the optimum operating point is determined as a function of a predetermined quality level.

3. Electric hand tool in particular for carrying out the method according to one of the preceding claims, having a first sensor for detecting the rotation speed, having an input for influence variables and having a controller, characterized in that the electric hand tool has at least one further sensor (10) which detects the feed rate relative to the workpiece to be processed, and in that the controller (13) is designed to determine the rotation speed and/or torque of the electric motor (1) of the electric hand tool from the entered processing variables and the detected feed rate.

4. Electric hand tool according to Claim 3, characterized in that the further sensor (10) has an inductive pick up (22) and a linear scale (23), which acts in conjunction with the pick up (22), on a guide system (20) which is moved relative to the inductive pick up (22), in that the magnetic scale (23) has markings (21) which can be detected by the pick up (22), and in that the controller (13) is designed such that a movement distance or feed rate can be determined from the detected markings (21).

5. Electric hand tool according to Claim 4, characterized in that the markings (21) are formed by magnetic segments.

6. Electric hand tool according to Claim 4 or 5, characterized in that the markings are applied on the guide system (20), as magnetic foil.

**7.** Electric hand tool according to Claim 4, characterized in that the markings (21) are applied on the linear scale (23) as depressions or protrusions.

**8.** Electric hand tool according to one of Claims 4 - 7, characterized in that the sensor (10) is arranged on an electric hand tool which is designed as a saw, grinder, drill or milling tool.

## Revendications

**1.** Procédé pour optimiser le travail avec un outil électrique portatif selon lequel on détecte les paramètres principaux de fonctionnement de l'outil et on les applique à une commande, la commande (13) de l'outil électrique à main recevant tout d'abord des grandeurs constantes de préférence rapportées à l'outil, rapportées à la matière et/ou des données rapportées au travail,
caractérisé en ce que,
pendant le travail, comme grandeurs variables l'outil électrique reçoit la vitesse d'avance et la commande (13) détermine à partir des données reçues, un point de fonctionnement optimum pour l'outil électrique, pour travailler la pièce (3) en fonction de la vitesse de rotation et/ou du couple.

**2.** Procédé selon la revendication 1,
caractérisé en ce que,
le point de fonctionnement optimum est défini en fonction d'un niveau de qualité prédéterminé.

**3.** Outil électrique à main notamment pour la mise en oeuvre du procédé selon l'une des revendications précédentes comprenant un premier détecteur pour détecter la vitesse de rotation, une entrée pour les paramètres de fonctionnement et une commande,
caractérisé en ce que,
l'outil comporte au moins un autre détecteur (10) qui saisit la vitesse d'avance par rapport à l'outil et la commande (13) est réalisée pour qu'à partir des paramètres de fonctionnement introduits et de la vitesse d'avance, saisie, on définisse la vitesse de rotation et/ou le couple du moteur électrique (1) de l'outil électrique à mains.

**4.** Outil électrique à main selon la revendication 3,
caractérisé en ce que,
l'autre détecteur (10) comporte un capteur inductif (22) et présente une échelle linéaire (23) coopérant avec le capteur (22) sur un système de guidage (20) qui se déplace par rapport au capteur inductif (22), l'échelle magnétique (23) comporte des repères (21) détectés par le capteur (22) et la commande (13) est réalisée pour déterminer un chemin ou une vitesse d'avance en fonction des repères détectés (21).

**5.** Outil électrique à main selon la revendication 4,
caractérisé en ce que
les repères (21) sont formés par des segments magnétiques.

**6.** Outil électrique à main selon la revendication 4 ou 5,
caractérisé en ce que,
les repères sont appliqués sur le système de guidage (20) sous la forme d'une feuille magnétique.

**7.** Outil électrique à main selon la revendication 4,
caractérisé en ce que,
les repères (21) sont des cavités ou des bossages sur l'échelle linéaire (23).

**8.** Outil électrique à main selon l'une des revendications 4 à 7,
caractérisé en ce que,
le capteur (10) équipe un outil électrique à main tel qu'une scie, un outil de ponçage, de perçage ou une fraise.

Fig. 1

Fig. 2